# EUROPÄISCHE PATENTSCHRIFT

(11) **EP 0 376 094 B1**
(45) Veröffentlichungstag und Bekanntmachung des Hinweises auf die Patenterteilung: **16.06.1993**
(21) Anmeldenummer: 89123266.2
(22) Anmeldetag: 15.12.1989
(51) Int. Cl.: C08F 220/28, E21B 33/138, C09K 17/00

(54) **Verfahren zur Härtung eines Injektionsmittels**
Process for hardening an injection agent
Procédé pour le durcissement d'un gel d'injection

(30) Priorität: 23.12.1988 DE 3843440
(43) Veröffentlichungstag der Anmeldung: 04.07.1990
(73) Patentinhaber: Röhm GmbH, 64293 Darmstadt (DE)
(72) Erfinder: Schroth, Theodor, D-6097 Trebur (DE); Quis, Peter, Dr., D-6100 Darmstadt (DE); Rietzel, Christian, Dr., D-6900 Heidelberg (DE)

(56) Entgegenhaltungen:
- EP-A- 0 242 513
- FR-A- 1 536 627
- US-A- 3 227 672
- US-A- 4 060 678

## Beschreibung

Die Erfindung betrifft ein gelbildendes, bei der Anwendung wasserhaltiges Injektionsmittel, das zum Verfestigen von Erdreich, zur Bildung wasserundurchlässiger Bodenschichten oder zum Abdichten von Bauwerken, insbesondere von Abwasserrohren und dergl. geeignet ist. Unter einem Injektionsmittel wird eine dünnflüssige Monomermischung verstanden, die bei Zusatz von Wasser und eines wasserlöslichen Peroxodisulfats in ein steifes, wasserhaltiges Gel übergeht. Solche Gele lassen Wasser nur durch Diffusion durchtreten und vermögen das Entweichen von strömendem Wasser durch Risse oder andere Undichtigkeiten von wasserführenden Systemen zu unterbinden.

Eine umfassende Übersicht über bekannte Injektionsmittel findet sich in EP-A 177 289. Injektionsmittel auf Basis von Acrylamid werden als technisch hervorragend, aber wegen der Giftigkeit des Acrylamids als toxikologisch bedenklich bezeichnet.

Aus der FR-A 1 536 627 ist ein wäßriges Injektionsmittel bekannt, das aus einem Metallsalz der Methacrylsäure, z.B. Magnesium-methacrylat, einem wasserlöslichen Comonomer, wie Acryl- und/oder Methacrylamid oder deren N-Methylolverbindungen, und einer vernetzenden wasserlöslichen Divinylverbindung, wie Diestern der Acryl- und/oder Methacrylsäure von Glykolen oder Methylen-bis-acrylamid oder -methacrylamid, aufgebaut ist. Als weiteren Bestandteil kann es Einheiten von Hydroxyalkylestern der Acryl- und/oder Methacrylsäure enthalten. Zur Gelbildung wird ein Redoxsystem aus einem Peroxodisulfat und einem wasserlöslichen tertiären Amin zugesetzt. Viele der so erzeugten Gele sind nicht flexibel, so daß sie bei Einwirkung von Scherkräften zerkrümeln. Das als Bestandteil des Redoxsystems verwendete tertiäre Amin kann aus dem Gel ausgewaschen werden und stellt dann eine potentielle Gefahr für das Grundwasser dar.

Aus der US-A 4,060,678 sind gelbildende Mittel bekannt, die als Träger für anionische biologisch aktive Stoffe, pharmazeutische Wirkstoffe, Hormone, Enzyme und kosmetische Wirkstoffe verwendet werden. Die Herstellung der zugrundeliegenden Polymerisate ist diesen Anwendungen angepaßt; entweder wird ein lösungmittelfreies Monomerengemisch zu einem festen Polymerisatblock verarbeitet oder die Polymerisation wird in einer Lösung der Monomeren in einem organischen Lösungsmittel durchgeführt. Es werden unpolare Lösungsmittel, wie Toluol, oder wassermischbare Lösungsmittel, wie Alkohol, verwendet. Zur Auslösung der Polymerisation werden übliche organische Initiatoren bei erhöhter Temperatur angewendet.

Der Erfindung liegt die Aufgabe zugrunde, ein Injektionsmittel zur Verfügung zu stellen, das die Gefährdung des Grundwassers vermindert und zu einem Gel von ausreichender Flexibilität härtet.

Die gestellte Aufgabe wird durch ein Verfahren zum Härten eines Injektionsmittels durch radikalische Polymerisation einer wäßrigen Monomerlösung, enthaltend einen Hydroxyalkylester der Acryl- und/oder Methacrylsäure, ein wasserlösliches, vernetzendes, mehrfach ethylenisch ungesättigtes, radikalisch polymerisierbares Monomer, sowie wenigstens 2 Gew.-%, bezogen auf das Gesamtgewicht der polymerisierbaren Verbindungen, eines wasserlöslichen tertiären Amins der Formel

CH₂ = CR'- CO - X - (R"-O)ₙ - R" - NR₂

worin R einen Alkyl-, Hydroxyalkyl- oder Alkoxyalkylrest, jeweils mit 1 bis 4 Kohlenstoffatomen im Alkylrest oder Alkoxyrest, bedeutet oder beide Reste R zusammen mit dem Stickstoffatom einen heterocyclischen Ring bilden und R' ein Wasserstoffatom oder eine Methylgruppe, X ein Sauerstoffatom oder eine Gruppe -NR- oder -NH- und R" eine Alkylengruppe mit 2 bis 4 Kohlenstoffatomen bedeuten und n eine ganze Zahl von 0 bis 4 ist, und Bildung eines wasserhaltigen Gels, gelöst, bei dem die Polymerisation bei einer Temperatur von wenigstens 0°C in einer wäßrigen Lösung der polymerisierbaren Verbindungen durch Zusatz einer wirksamen Menge einer wäßrigen Lösung eines wasserlöslichen anorganischen Peroxodisulfats oder eines anderen wasserlöslichen, radikalbildenden Initiators, der zusammen mit dem tertiären Amin ein bei tiefen Temperaturen wirksames Redoxsystem bildet, unter Bildung des wasserhaltigen Gels durchgeführt wird.

Das erfindungsgemäß in dem Injektionsmittel enthaltene tertiäre Amin wirkt sich in mehrfacher Hinsicht vorteilhaft auf die Eigenschaften des entstehenden Gels aus. Während der Härtung wirkt es zusammen mit dem radikalbildenden Initiator als Redoxsystem. Da es eine leicht polymerisierbare Acryl- und/oder Methacrylgruppe trägt, wird es während der Polymerisation in das entstehende Polymerisat eingebaut und dadurch wasserunlöslich gemacht. Die Gefahr der späteren Ausschwemmung des Amins mit durchdiffundierendem Wasser ist damit ausgeschlossen. Im einpolymerisierten Zustand wirkt sich das tertiäre Amin plastifizierend auf das Gel aus und verleiht diesem dauerhafte Flexibilität. Damit ist auch die Gefahr gebannt, daß strömendes Wasser durch Risse in dem Gel hindurchtreten könnte.

Bei den formelmäßig dargestellten tertiären Aminen handelt es sich um wasserlösliche, substituierte Ester oder Amide der Acryl- und/oder Methacrylsäure. Im Falle der Acrylsäureabkömmlinge ist R'= H; im Falle der Methacrylsäureabkömmlinge R'= CH₃. Die Amide sind wegen ihrer höheren Hydrolysebeständigkeit vor den Estern bevorzugt. Sie enthalten vorzugsweise die Gruppe X = NH. Als Gruppe R" kommen beispielsweise 1,2-Propylen-, 1,2- und 1,4-Butylen- und bevorzugt 1,2-Ethylen- und 1,3-Propylen-Gruppen in Betracht. In der Regel ist n = 0. Bei esterartigen Verbindungen obiger Formel, also mit X = O, hat n vorzugsweise einen Wert von 0 bis 4, insbesondere 0 bis 2. Die Reste R am tert. Amin-Stickstoffatom sind vorzugsweise Alkyl- oder Hydroxyalkylreste mit 1 bis 4 Kohlenstoffatomen, insbesondere Methylgruppen. Beide Reste R können zusammen mit dem Stickstoffatom einen vorzugsweise 5- oder 6-gliedrigen Heterocyclus bilden, z.B. einen Pyrrolidin-, Piperidin- oder Morpholin-Ring.

Beispiele für die erfindungsgemäß eingesetzten tertiären Amine sind
2-Dimethylamino-ethyl-acrylat und -methacrylat
3-(N,N-Dimethylamino)-propyl-acrylat und -methacrylat,
4-(N,N-Dimethylamino)-butyl-acrylat und -methacrylat,
3-(N,N-Dimethylamino)-propyl-acrylamid und -methacrylamid,
Triethanolamin-monoacrylat und -monomethacrylat,
2-(Dimethylaminoethyloxy)-ethyl-acrylat und -methacrylat,
2-Imidazolyl-ethyl-acrylat und -methacrylat,
2-Piperazinyl-ethyl-acrylat und -methacrylat,
2-Piperazinyl-ethyl-acrylamid und -methacrylamid,
N,N-Dimethylamino-neopentyl-acrylat und -methacrylat,
N,N-Dimethylamino-neopentyl-acrylamid und -methacrylamid,
(1,2,2,6,6-Pentamethyl-piperidyl-4)-acrylat und -methacrylat,
3-Morpholino-propyl-acrylamid und -methacrylamid,2-Morpholino-ethyl-acrylat und -methacrylat,
2-(N,N-Dibutylamino)-ethyl-acrylat und -methacrylat,
4-Diethylamino-1-methyl-butyl-acrylamid und -methacrylamid.

Als Hydroxyalkylester der Acryl- und/oder Methacrylsäure kommen wasserlösliche Ester mit 2 bis 4 Kohlenstoffatomen im Hydroxyalkylrest in Betracht, wie Hydroxyäthyl-acrylat und -methacrylat, 2-Hydroxypropyl-acrylat und -methacrylat, 2- oder 4-Hydroxybutyl-acrylat und -methacrylat. Auch Hydroxy-(polyalkoxy-alkyl)-ester der Struktur CH₂ = CR - CO - O -(Alk-O)ₓ - H, wobei R = H oder CH₃, Alk ein Alkylenrest mit 2 bis 4 Kohlenstoffatomen und x eine ganze Zahl von 0 bis 10 ist, sind geeignet.

Geeignete wasserlösliche, vernetzende, mehrfach ethylenisch ungesättigte, radikalisch polymerisierbare Monomere sind zum Beispiel Diacrylate und Dimethacrylate von Polyethylenglykolen, die vorzugsweise 1 bis 10 Ethylenoxidreste enthalten, sowie Methylen-bis-acrylamid oder -methacrylamid, Bis-Acrylamidomethylether oder Bis-Methacrylamidomethylether der genannten Polyethylenglykole.

Obwohl die Ziele der Erfindung mit Monomeren der genannten Gruppen allein erreichbar sind, können weitere wasserlösliche Monomere insoweit mitverwendet werden, wie sie sich nicht nachteilig auf die Eigenschaften des entstehenden Gels auswirken. Das entsprechende gilt für nicht polymerisierbare Bestandteile, die in dem wäßrigen Injektionsmittel gelöst oder suspendiert sein können. Die verwendeten Monomeren müssen wenigstens soweit wasserlöslich sein, daß sie insgesamt bei 20°C eine wenigstens 10-, vorzugsweise 20- bis 60-prozentige wäßrige Lösung bilden. Da die gelösten Monomeren in manchen Fällen wechselseitig als Lösungsvermittler wirken, können auch solche Monomeren verwendet bzw. mitverwendet werden, die allein mit Wasser nicht vollständig mischbar sind. Besonders bevorzugt sind Monomere, die bei Temperaturen im Bereich von -5 bis +40°C mit Wasser vollständig mischbar sind. Vorzugsweise enthält das Injektionsmittel eine geringe Menge eines Polymerisations-Inhibitors, wie z.B. Hydrochinon, um seine Lagerfähigkeit zu gewährleisten.

Bevorzugte Gehalte an polymerisierbaren Verbindungen sind, bezogen auf das wasserfreie Injektionsmittel:
10 bis 90, vorzugsweise 20 bis 60 Gew.-% Hydroxyalkylester der Acryl- und/oder Methacrylsäure,
3 bis 15, vorzugsweise 5 bis 10 Gew.-% vernetzende Monomere,
3 bis 50, vorzugsweise 10 bis 20 Gew.-% wasserlösliches tertiäres Amin,
0 bis 30, vorzugsweise 0 bis 10 Gew.-% weitere wasserlösliche Comonomere.

Das Injektionsmittel wird bevorzugt wasserfrei gelagert und versandt und erst kurz vor der Anwendung mit Wasser verdünnt. Bei der Lagerung des wäßrigen Injektionsansatzes können im Verlauf mehrerer Tage Entmischungen auftreten. Der wäßrige Injektionsansatz soll mit einer Konzentration angewandt werden, bei der durch die radikalische Polymerisation unmittelbar ein Gel mit den gewünschten Eigenschaften entsteht. Geeignet ist z.B. eine Konzentration von 10 bis 60 Gew.-%, vorzugsweise 20 bis 40 Gew.-% an polymerisierbaren Verbindungen.

### Härtungsverfahren

Der Injektionsansatz ist durch Zusatz von 1 bis 7 Gew.-%, bezogen auf das Gesamtgewicht des Ansatzes, eines wasserlöslichen anorganischen Peroxodisulfats, wie Alkali- oder Ammonium-peroxodisulfat, bei Temperaturen von wenigstens 0°C, vorzugsweise bei einer Temperatur von 0 bis 40°C in kurzer Zeit unter Bildung eines flexiblen Gels härtbar. Die Härtungszeit beträgt beispielsweise 20 bis 120 Sekunden, vorzugsweise jedoch weniger als 60 Sekunden. Neben oder anstelle von Peroxodisulfat können andere wasserlösliche, radikalbildende Initiatoren, wie tert.-Butylhydroperoxid, in einer wirksamen Menge eingesetzt werden, sofern sie zusammen mit dem tertiären Amin ein bei tiefen Temperaturen wirksames Redoxsystem bilden.

Wegen der sehr schnellen Härtung auch bei tiefer Temperatur sind besondere Vorkehrungen notwendig, um das Injektionsmittel nach dem Zumischen des Initiators an den Einsatzort zu befördern, an dem es sich zu einem Gel verfestigen soll. Man verwendet z.B. eine Mischkammer mit geringem Rauminhalt, in die das Injektionsmittel und eine wäßrige Lösung des Initiators so eingeführt werden, daß sie sofort innig vermischen und danach unmittelbar an den Anwendungsort gelangen.

Eine Vorrichtung, mittels derer Undichtigkeiten an den Muffen einer Abwasserrohrleitung abgedichtet werden können, ist aus EP-A 177 289 bekannt. Sie besteht aus einem zylindrischen Körper, der den Querschnitt der Rohrleitung im wesentlichen ausfüllt. Über zwei Schlauchleitungen werden das Injektionsmittel und die Initiatorlösung zugeführt. Der zylindrische Körper enthält an seiner Außenwandung eine Reihe von Austrittsöffnungen, aus denen das aktivierte Injektionsmittel von innen in die undichten Muffen eingepreßt werden kann. An einem Zugseil wird der als "Packer" bezeichnete Körper schrittweise von Muffe zu Muffe weitergeschleppt.

Der aktivierte Injektionsansatz kann auch in Fugen von Mauerwerk oder Beton oder in die Oberfläche von porösem Beton oder von Erdreich eingepreßt werden, wo sich dann eine gegen strömendes Wasser undurchlässige Schicht ausbildet. Zum Abdichten von Beton und Mauerwerk wird z.B. ein Loch ausreichend tief eingebohrt und über einen speziellen "Packer", der nach der Injektion im Bohrloch verbleibt, der Injektionsansatz eingepreßt.

In den nachfolgenden Beispielen werden den erfindungsgemäßen Injektionsmitteln A bis E einige abweichend zusammengesetzte Injektionsmittel V1 bis V3 gegenübergestellt und an deren Eigenschaften die synergistische Wirkung der Komponenten anschaulich gemacht. Alle Injektionsmittel wurden mit einem Monomeranteil von 22 Gew.-% bzw. einem Wasseranteil von 78 Gew.-% angesetzt.

Zur Bewertung werden die Gelzeit, das Wasserbindevermögen, die Abgabe von tert. Amin an umgebendes Wasser und die Flexibilität des Gels herangezogen. Als Gelzeit wird die Zeitspanne von der Mischung des Injektionsmittels mit der Initiatorlösung bis zur Bildung eines standfesten Gels bezeichnet. Das Wasserbindevermögen ergibt sich aus der Differenz zwischen der im Ansatz enthaltenen Wassermenge und der nach der Gelbildung gegebenenfalls abfiltrierbaren Wassermenge. Die Freisetzung von tert. Amin wurde durch Titration festgestellt und mit positiv (+) oder negativ (-) angegeben. Die Flexibilität wurde nach einer subjektiven Bewertungsskala unter anwendungstechnischen Gesichtspunkten bewertet; dabei bedeuten
- Stufe 1 :: ideale Flexibilität
- Stufe 2 :: gute, praktisch ausreichende Flexibilität
- Stufe 3 :: gerade noch ausreichende Flexibilität
- Stufe 4 :: unzureichende Flexibilität, bei Krafteinwirkung krümelig zerfallend.

Es werden jeweils 50 Gew.-Teile 44 Gew.-%-iges Injektionsmittel und 50 Gew.-Teile einer 8-Gew.-%-igen Natrium-peroxodisulfat-Lösung, beide von 20 Grad C, gemischt. Nachfolgend wird jeweils die Zusammensetzung des Monomeranteils der Injektionsmittele in Gew.-% angegeben:
- A :: 72 Gew.-% Hydroxyethylmethacrylat,
10 Gew.-% Polyethylenglykol-dimethacrylat (8-9 EO-Reste)
18 Gew.-% N,N-Dimethylaminopropyl-methacrylamid.
- B :: 72 Gew.-% Hydroxyethylmethacrylat,
10 Gew.-% Polyethylenglykol-dimethacrylat (8-9 EO-Reste)
18 Gew.-% 2-Dimethylaminoethylacrylat.
- C :: 77 Gew.-% Hydroxyethylacrylat,
5 Gew.-% Ethylenglykol-dimethacrylat,
18 Gew.-% Dimethylaminoethyl-methacrylat.
- D :: 73 Gew.-% Hydroxyethylmethacrylat
11 Gew.-% Ethylenglykol-dimethacrylat,
16 Gew.-% N,N-Dimethylaminopropyl-methacrylamid.
- E :: 72 Gew.-% Hydroxyethylmethacrylat
10 Gew.-% Polyethylenglykol-dimethacrylat (8-9 EO-Reste)
18 Gew.-% Dimethylaminoethyl-methacrylat.

### Vergleichsversuche:

- V1 :: nicht polymerisierbares tert. Amin
78 Gew.-% Hydroxyethylmethacrylat
4 Gew.-% Polyethylenglykol-dimethacrylat (8-9 EO-Reste)
18 Gew.-% Triethanolamin
- V2 :: ohne Hydroxyester
86 Gew.-% N,N-Dimethylaminopropyl-methacrylamid.
14 Gew.-% Polyethylenglykol-dimethacrylat (8-9 EO-Reste)
- V3 :: nach FR-A 1 536 627
63 Gew.-% Hydroxyethylmethacrylat
10 Gew.-% Magnesium-methacrylat
9 Gew.-% Ethylenglykol-dimethacrylat
18 Gew.-% Triethanolamin

| Ergebnisse: | | | | |
|---|---|---|---|---|
| Beispiel | Gelzeit Sekunden | ungebund.Wasser Gramm | Flexibilität Stufe | Aminabgabe |
| A | 30 | 0 | 2 | - |
| B | 35 | 0 | 2 | - |
| C | 25 | 0 | 2 | - |
| D | 30 | 0 | 2-3 | - |
| E | 35 | 0 | 2-3 | - |
| V1 | 40 | 30 | 1 | + |
| V2 | 60 | 0 | 4 | - |
| V3 | 70 | 0 | 4 | + |

### Ergänzendes Beispiel:

### Injektionsmittelkomponente 1

70,0 Gew.-% Hydroxyethylmethacrylat
10,0 Gew.-% Polyethylenglykoldimethacrylat (8-9 EO-Reste)
2,0 Gew.-% Glykoldimethacrylat

### Injektionsmittelkomponente 2

18,0 Gew.-% N,N-Dimethylaminopropylmethacrylamid
1. Der Zusatz von Glykoldimethacrylat bringt bei tieferen Temperaturen (< 10°C) eine zusätzliche Beschleunigung der Reaktionszeit.
2. Die getrennte Lagerung des N,N-Dimethylaminopropylmethacrylamides von den übrigen Monomerkomponenten bringt längere Lagerzeiten. Die Mischung der beiden Injektionsmittelkomponenten ist nur ca. 1 Woche lagerstabil.

| Gelzeit (20°C) Sekunden | ungebundenes Wasser Gramm | Flexibilität Stufe | Aminabgabe |
|---|---|---|---|
| 30 | 0 | 2 | - |

## Patentansprüche

1. Verfahren zum Härten eines Injektionsmittels durch radikalische Polymerisation einer wäßrigen Monomerlösung, enthaltend einen Hydroxyalkylester der Acryl- und/oder Methacrylsäure, ein wasserlösliches, vernetzendes, mehrfach ethylenisch ungesättigtes, radikalisch polymerisierbares Monomer, sowie wenigstens 2 Gew.-%, bezogen auf das Gesamtgewicht der polymerisierbaren Verbindungen, eines wasserlöslichen tertiären Amins der Formel
CH₂ = CR'- CO - X - (R"-O)ₙ - R" - NR₂
worin R einen Alkyl-, Hydroxyalkyl- oder Alkoxyalkylrest, jeweils mit 1 bis 4 Kohlenstoffatomen im Alkylrest oder Alkoxyrest, bedeutet oder beide Reste R zusammen mit dem Stickstoffatom einen heterocyclischen Ring bilden und R' ein Wasserstoffatom oder eine Methylgruppe, X ein Sauerstoffatom oder eine Gruppe -NR- oder -NH- und R" eine Alkylengruppe mit 2 bis 4 Kohlenstoffatomen bedeuten und n eine ganze Zahl von 0 bis 4 ist, und Bildung eines wasserhaltigen Gels,
dadurch gekennzeichnet,
daß die Polymerisation bei einer Temperatur von wenigstens 0°C in einer wäßrigen Lösung der polymerisierbaren Verbindungen durch Zusatz einer wirksamen Menge einer wäßrigen Lösung eines wasserlöslichen anorganischen Peroxodisulfats oder eines anderen wasserlöslichen, radikalbildenden Initiators, der zusammen mit dem tertiären Amin ein bei tiefen Temperaturen wirksames Redoxsystem bildet, unter Bildung des wasserhaltigen Gels durchgeführt wird.

2. Verfahren nach Anspruch 1, dadurch gekennzeichnet, daß als vernetzendes Monomer ein Glykol-diacrylat oder - dimethacrylat oder Polyethylenglykol-diacrylat oder - dimethacrylat oder deren Gemisch eingesetzt wird.

3. Verfahren nach Anspruch 1 oder 2, dadurch gekennzeichnet, daß es bei einer Temperatur von 0 bis 40°C durchgeführt wird.

4. Verfahren nach einem oder mehreren der Ansprüche 1 bis 3, dadurch gekennzeichnet, daß die wäßrige Lösung des Injektionsmittels innerhalb der Muffen einer Abwasserrohrleitung, in Fugen von Mauerwerk oder Beton oder in einer Schicht von porösem Beton oder Erdreich polymerisiert wird.

## Claims

1. A process for hardening an injection agent by radical polymerisation of an aqueous monomer solution containing a hydroxyalkylester of acrylic and/or methacrylic acid, a water-soluble, cross-linking, multi-ethylenically unsaturated, radically polymerisable monomer as well as at least 2 wt.%, based on the total weight of polymerisable compounds, of a water-soluble tertiary amine of formula
CH₂ = CR' - CO - X - (R"-O)ₙ - R" - NR₂
wherein R is an alkyl, hydroxyalkyl or alkoxyalkyl group, each having 1 to 4 carbon atoms in the alkyl group or alkoxy group, or both groups R form, together with the nitrogen atom, a heterocyclic ring, and R' is a hydrogen atom or a methyl group, X is an oxygen atom or a group -NR- or -NH- and R" is an alkylene group having 2 to 4 carbon atoms, and n is a whole number from 0 to 4, and for forming a water-containing gel, characterised in that the polymerisation is carried out at a temperature of at least 0°C in an aqueous solution of the polymerisable compounds by adding an effective amount of an aqueous solution of a water-soluble inorganic peroxydisulphate or another water-soluble, radical-forming initiator which produces, together with the tertiary amine, a Redox system effective at low temperatures, thereby forming the water-containing gel.

2. A process according to claim 1, characterised in that a glycol-diacrylate or -dimethacrylate or polyethylene glycol-diacrylate or -dimethacrylate or a mixture thereof is used as cross-linking monomer.

3. A process according to claim 1 or 2, characterised in that it is carried out at a temperature of 0 to 40°C.

4. A process according to one or more of claims 1 to 3, characterised in that the aqueous solution of the injection agent is polymerised inside the sockets of a waste water pipeline, in joints of brickwork or concrete or in a layer of porous concrete or earth.

## Revendications

1. Procédé de durcissement d'un produit d'injection, par polymérisation radicalaire d'une solution aqueuse de monomères contenant un acrylate et/ou un méthacrylate d'hydroxyalkyle, un monomère hydrosoluble réticulant à plusieurs insaturations éthyléniques, susceptible de polymérisation radicalaire, ainsi qu'au moins 2% en poids, par rapport au poids total des composés polymérisables, d'une amine tertiaire hydrosoluble de formule
CH₂ = CR'- CO - X - (R"-O)ₙ - R" - NR₂
dans laquelle R représente un reste alkyle, hydroxyalkyle ou alcoxyalkyle renfermant chacun 1 à 4 atomes de carbone dans le reste alkyle ou le reste alcoxy, ou les deux restes R forment ensemble, avec l'atome d'azote, un noyau hétérocyclique et R' représente un atome d'hydrogène ou un groupement méthyle, X représente un atome d'oxygène ou un groupement -NR- ou -NH- et R" représente un groupement alkylène à 2-4 atomes de carbone et n est un nombre entier de 0 à 4, et formation d'un gel hydraté, caractérisé en ce que la polymérisation est conduite à une température d'au moins 0°C dans une solution aqueuse des composés polymérisables, par addition d'une quantité efficace d'une solution aqueuse d'un peroxodisulfate inorganique hydrosoluble ou d'un autre initiateur radicalaire hydrosoluble qui forme, avec l'amine tertiaire, un système redox actif à basse température, avec formation du gel hydraté.

2. Procédé selon la revendication 1, caractérisé en ce qu'on utilise, conme monomère réticulant, un diacrylate ou diméthacrylate de glycol, un diacrylate ou diméthacrylate de polyéthylèneglycol ou un mélange de ceux-ci.

3. Procédé selon la revendication 1 ou 2, caractérisé en ce qu'il est exécuté à une température de 0 à 40°C.

4. Procédé selon l'une quelconque des revendications 1 à 3, caractérisé en ce que la solution aqueuse du produit d'injection est polymérisée à l'intérieur des manchons d'accouplement d'une canalisation d'eaux d'égout, dans les joints d'un ouvrage en maçonnerie ou en béton ou dans une couche de béton ou de terrain poreux.
